## Europäisches Patentamt

## European Patent Office

## Office européen des brevets

(19)

(11) Veröffentlichungsnummer : **0 010 137**
**B1**

(12) **EUROPÄISCHE PATENTSCHRIFT**

(45) Veröffentlichungstag der Patentschrift :
11.11.81

(51) Int. Cl.³ : **H 01 L 23/56, H 02 M 3/155**

(21) Anmeldenummer : **79103101.6**

(22) Anmeldetag : **23.08.79**

(54) **Substratvorspannungs-Generatorschaltung.**

(30) Priorität : 24.10.78 US 954946

(43) Veröffentlichungstag der Anmeldung :
30.04.80 (Patentblatt 80/09)

(45) Bekanntmachung des Hinweises auf die Patenterteilung : 11.11.81 Patentblatt 81/45

(84) Benannte Vertragsstaaten :
DE FR GB

(56) Entgegenhaltungen :
DE - A - 2 244 988
DE - A1 - 2 525 057
US - A - 3 806 741
US - A - 3 821 627

IBM TECHNICAL DISCLOSURE BULLETIN
Band 21, Nr. 2, Juli 1978, New York
B.H. JENSEN « Substrate voltage generator circuit »

IBM TECHNICAL DISCLOSURE BULLETIN
Band 21, Nr. 12, Mai 1979, New York
L.A. GLADSTEIN et al. « FET substrate generator derived from low voltage power supply »
Seiten 4935 bis 4936

(73) Patentinhaber : **International Business Machines Corporation**

**Armonk, N.Y. 10504 (US)**

(72) Erfinder : **Gladstein, Leo A.**
**5806 Camino Del Conde**
**Tucson Arizona 85718 (US)**
Erfinder : **Love, Robert D.**
**60 Beth Drive**
**Kingston, NY 12401 (US)**
Erfinder : **Martin, Larry C.**
**8030 E. Ft. Lowell Road**
**Tucson Arizona 85715 (US)**

(74) Vertreter : **Böhmer, Hans Erich, Dipl.-Ing.**
**Schönaicher Strasse 220**
**D-7030 Böblingen (DE)**

Substratvorspannungs-Generatorschaltung

Die Erfindung betrifft eine Substratvorspannungs-Generatorschaltung für integrierte Halbleiterschaltungen, welche zwischen einer Betriebsspannungsquelle und Erdpotential eingeschaltet ist, mit einem ersten zwischen Betriebsspannungsquelle und einem ersten Kno-tenpunkt eingeschalteten Impedanzelement, ein-em zwischen dem ersten Knotenpunkt und Erdpotential eingeschalteten ersten Feldeffekttransistor, an dessen Gateelektrode ein erster periodischer Spannungsimpuls anliegt, einem zweiten an einem zweiten Knotenpunkt liegenden Feldeffekttransistor, an dessen Gateelektrode ebenfalls der erste periodische Spannungsimpuls anliegt, einem zwischen erstem und zweitem Knotenpunkt eingeschalteten ersten Kondensator, einem zwischen einem dritten und einem vierten Knotenpunkt eingeschalteten zweiten Kondensator und mit einem zweiten nur in einer Richtung Strom leitenden Bauelement, das zwischen viertem Knotenpunkt un dem Substrat eingeschaltet und so gepolt ist, daß der Strom von dem Substrat wegfließt. Eine derartige Schaltung ist aus IBM Technical Disclosure Bulletin Bd. 21, Nr. 2, Juli 1978, Seiten 727 und 728 bekannt.

Der Grund für die Verringerung der Größe der Versorgungsspannungen für integrierte Feldeffekttransistorschaltungen leitet sich aus dem Versuch ab, FET-Schaltungen mit bipolaren TTL-Schaltungen verträglich zu machen, die bei 5 Volt statt bei 8,5 Volt arbeiten, wobei gleichzei-tig Herstellungsverfahren mit geringeren Lei-tungsabständen verwendet werden sollen, die ihrerseits wieder geringere Versorgungsspannungen erfordern, um durch Spannungen verursachte Fehler zu vermeiden. Eine weitere Schwierigkeit ergibt sich jedoch daraus, daß durch Weglassen der Spannungsversorgung mit 8,5 Volt die Erzeugung einer negativen Substratvorspannung von 5 Volt unter Verwendung der bisher bekannten Substratvorspannungs-Erzeugungsschaltungen ausschließt.

In der US-A 3 806 741 ist eine Substratvorspannungs-Generatorschaltung offenbart, die eine Spannungsversorgung von 8,5 Volt benötigt, und eine Substratvorspannung von −5 Volt liefert. Die Verwendung von statischen Lastwiderständen hat relativ hohe Verlustleistung zur Folge, und die Schaltung benötigt eine beachtliche Fläche für ihre Anordnung auf einem mit integrierten Schaltungen versehenen Halbleiterplättchen. Da integrierte FET-Schaltungen normalerweise eine Spannung von +5 Volt benötigen, müssen für eine integrierte Schaltung, die diese Spannungsgeneratorschaltung gemäß dem Stande der Technik verwendet, drei Versorgungsspannungen vorgesehen werden, nämlich +8,5 Volt, +5 Volt und Erdpotential. Würde man bei dieser bekannten Schaltung die Spannung der Betriebsspannungsquelle auf +5 Volt verringern, dann könnte die Substratvorspannung von −5 Volt nicht erzeugt werden.

Die der Erfindung zugrunde liegende Aufgabe läßt sich also aus den bisherigen Ausführungen dahingehend ableiten, daß eine Substratvor-spannungs-Generatorschaltung geschaffen wer-den soll, die für ein mit integrierten Schal-tungen versehenes Halbleiterplättchen eine nega-tive Substratvorspannung aus einer niedrigeren positiven Versorgungsspannung liefert, als dies bisher möglich war.

Diese der Erfindung zugrunde liegende Aufgabe wird gelöst durch die Lage des zweiten Feldeffekttransistors zwischen der Betriebsspannungsquelle und dem zweiten Knotenpunkt, ferner durch ein zwischen dem zweiten und dem dritten Knotenpunkt eingeschaltetes zweites Impedanzelement, einen zwischen drittem Knotenpunkt und Erdpotential eingeschalteten dritten Feldeffekttransistor, an dessen Gateelektrode ein zweiter periodischer Spannungsimpuls anliegt, dessen Spannung immer dann dem Einzustand entspricht, wenn die Spannung des er-sten periodischen Spannungsimpulses dem Aus-zustand entspricht und umgekehrt, sowie durch ein erstes nur in einer Richtung Strom leitendes Bauelement, das zwischen dem vierten Knotenpunkt und Erdpotential eingeschaltet und so gepolt ist, daß der Strom nach Erdpotential abfließt, und durch eine Kapazität des zweiten Kondensators, die kleiner ist als die Kapazität des ersten Kondensators, wobei das erste einseitig leitende Bauelement den zweiten Kondensator dann entlädt, wenn die Spannung am dritten Knotenpunkt in Abhängigkeit von der Spannung am zweiten Knotenpunkt ansteigt und dadurch, daß das zweite einseitig leitende Bauelement dann Strom von dem Substrat zieht, wenn die Spannung an dem vierten Knotenpunkt in Abhängigkeit davon abfällt, daß der zweite periodische Spannungsimpuls den dritten FET einschaltet.

Die Erfindung wird nunmehr anhand von Ausführungsbeispielen in Verbindung mit den beigefügten Zeichnungen im einzelnen näher erläutert.

In den Zeichnungen zeigen
Fig. 1 ein Schaltbild der Substratvorspannungs-Generatorschaltung,
Fig. 2 ein Impulsdiagramm für die an den verschiedenen Knotenpunkten der in Fig. 1 dargestellten Schaltung auftretenden Potentiale oder Spannungen, wenn am Ausgangsknotenpunkt N5 der eingeschwungene Zustand erreicht ist,
Fig. 3 den Aufbau der Spannung am Ausgangsknotenpunkt N5 über viele Zyklen, und
Fig. 4 ein Schaltbild einer weiteren Ausführungsform der Erfindung.

Darstellung der bevorzugten Ausführungsformen

Die Erfindung betrifft eine mit Feldeffekttransistoren arbeitende Substratvorspannungs-Generatorschaltung zur Umwandlung der von einer einzigen Spannungsquelle gelieferten Spannung und Erdpotential in ein negatives Potential, dessen Absolutwert größer ist als das Potential der Spannungsquelle zum Anlegen dieses Potentials an das Substrat einer integrierten Schaltung, auf der die Schaltung aufgebaut ist. Die Schaltung verbraucht je Einheit des an die Schaltung abgegebenen Stroms weniger Leistung und nimmt auch weniger Platz ein als bisher bekannte Schaltungen. Die Schaltung wendet das Prinzip der Spannungsverdopplung auf einen ersten Kondensator an und erzielt damit die gewünschte Spannungsamplitude über einem zweiten Kondensator und wendet dann das Prinzip der Wechselspannungskopplung auf den zweiten Kondensator an, der über eine Impedanz mit dem ersten Kondensator verbunden ist, und erreicht damit die gewünschte Polarisationsumkehr für die zu erzeugende Substratvorspannung. Diese Schaltung hat die zum Aussteuern des Substrats auf eine negative Spannung notwendige Stromerzeugungskapazität und besitzt die geforderte Stromsenke, so daß das Substrat auf einer ausreichenden negativen Vorspannung gehalten wird.

Die hier offenbarte Substratvorspannungs-Generatorschaltung kann aus einer Spannung von +5 Volt der Spannungsversorgung und Erdpotential eine Spannung von −5 Volt als Substratvorspannung erzeugen. Dabei kann die Schaltung als Stromsenke für vom Substrat abfließende Ströme wirken, ohne daß dadurch übermäßig Leistung in Verlustleistung umgesetzt wird, und nimmt wesentlich weniger Raum ein als bisher bekannte Substratvorspannungs-Generatorschaltungen.

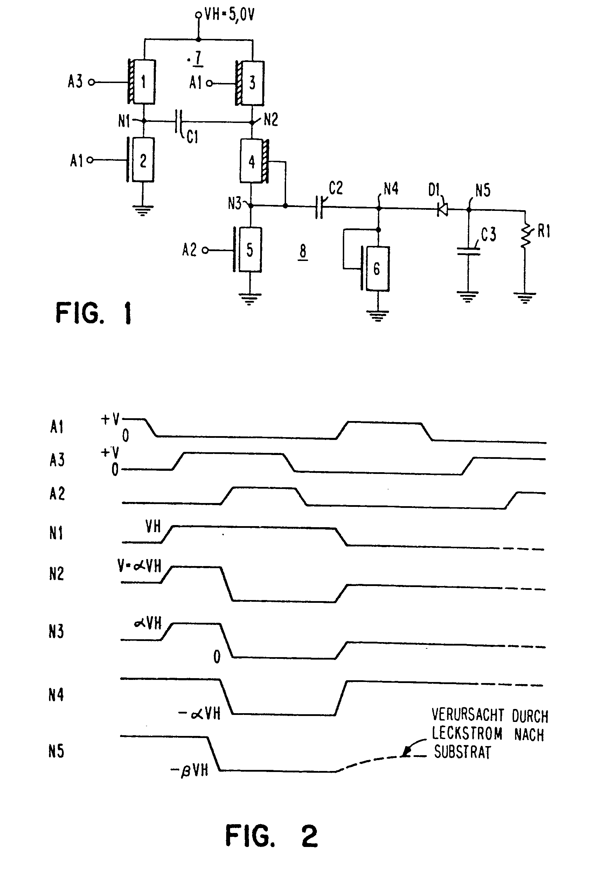

Fig. 1 zeigt die Substratvorspannungs-Generatorschaltung, die zwischen der Betriebsspannungsquelle $V_H$ mit einer Spannung von +5 Volt und Erdpotential eingeschaltet ist. Die Substratvorspannungs-Generatorschaltung wird auf einem mit integrierten Schaltungen versehenen Halbleitersubstrat gebildet und liefert das Vorspannungspotential für das Substrat, das durch den Kondensator C3 dargestellt werden soll. R1 stellt den Leckstromkreis des Substrats nach Masse dar.

Ein erstes Impedanzelement 1 ist zwischen der Betriebsspannungsquelle $V_H$ und einem ersten Knotenpunkt N1 eingesetzt. Ein erster Feldeffekttransistor 2 ist zwischen dem ersten Knotenpunkt N1 und Erdpotential eingeschaltet, und seine Gateelektrode ist an einem ersten periodisch auftretenden Spannungsimpuls A1 angeschlossen.

Ein zweiter Feldeffekttransistor 3 ist zwischen der Betriebsspannungsquelle $V_H$ und einem zweiten Knotenpunkt N2 eingeschaltet und ist mit seiner Gateelektrode an dem ersten periodischen Spannungsimpuls A1 angeschlossen.

Ein ersten Kondensator C1 verbindet den ersten Knotenpunkt mit dem zweiten Knotenpunkt. Der erste Feldeffekttransistor 2, der zweite Feldeffekttransistor 3 und der erste Kondensator C1 arbeiten in Abhängigkeit von dem ersten periodischen Spannungsimpuls A1 und liefern eine hohe Spannung an den zweiten Knotenpunkt N2, dessen Größe etwa der doppelten Differenz zwischen der Versorgungsspannung der Betriebsspannungsquelle $V_H$ und Erdpotential beträgt.

Ein drittes Impedanzelement 4 ist zwischen dem zweiten Knotenpunkt N2 und einem dritten Knotenpunkt N3 eingeschaltet. Ein dritter Feldeffekttransistor 5 ist zwischen dem dritten Knotenpunkt N3 und Erdpotential eingeschaltet und ist mit seiner Gateelektrode an einem zweiten periodischen Spannungsimpuls A2 angeschlossen, der auf eine dem Einzustand entsprechende Spannung ansteigt, nachdem der erste periodische Spannungsimpuls auf eine dem Auszustand entsprechende Spannung abgefallen ist.

Ein erstes, nur in einer Richtung Strom führendes Bauelement, wie ein mit Selbstvorspannung arbeitender FET 6, ist zwischen einem vierten Knotenpunkt N4 und Erdpotential eingeschaltet und so gepolt, daß er Strom nach Erdpotential ableitet. Ein zweiter Kondensator C2 hat eine Kapazität, die kleiner ist als die Kapazität des ersten Kondensators C1 und ist zwischen dem dritten Knotenpunkt N3 und dem vierten Knotenpunkt N4 eingeschaltet. Das erste nur in einer Richtung Strom führende Bauelement 6 entlädt den zweiten Kondensator C2 dann, wenn die Spannung am dritten Knotenpunkt N3 in Abhängigkeit von der am zweiten Knotenpunkt N2 liegenden Spannung ansteigt.

Ein zweites, nur in einer Richtung Strom leitendes Bauelement, wie z.B. eine Diode D1, ist zwischen dem vierten Knotenpunkt N4 und dem Substratknotenpunkt N5 angeschlossen und so gepolt, daß der Strom aus dem Substrat herausfließt. Das zweite, nur in einer Richtung Strom leitende Bauelement D1 leitet Strom von dem Substrat weg, in Abhängigkeit von einer Verringerung der am Knotenpunkt N4 liegenden Spannung, in Abhängigkeit von dem zweiten periodischen Spannungsimpuls A2, und schaltet damit den dritten Feldeffekttransistor 5 ein. Auf diese Weise wird eine negative Substratvorspannung am Substratknotenpunkt N5 erzeugt, deren Absolutwert größer ist als die Größe der Versorgungsspannung der Betriebsspannungsquelle $V_H$.

Das erste Impedanzelement 1 kann ein FET vom Verarmungstyp sein, dessen Gateelektrode an einem dritten periodischen Spannungsimpuls A3 angeschlossen ist, dessen Spannung auf eine dem Einzustand entsprechende Spannung ansteigt, nachdem der zweite periodische Spannungsimpuls A2 auf eine dem Einzustand entsprechende Spannung ansteigt. Die entsprechenden Impulsdiagramme für die Spannungsimpulse A1, A2 und A3 können in Fig. 2 miteinander verglichen werden.

Im Betrieb der Schaltung ist der zweite FET 3 dann in seinem leitenden Zustand, wenn sich der Spannungsimpuls A1 im Einzustand befindet, und geht in seinen Sperrzustand über, wenn der erste Spannungsimpuls A1 in seinen Auszustand übergeht und der zweite Knotenpunkt N2 eine relativ hohe Spannung annimmt. Der Grund dafür liegt darin, daß das Sourcepotential des zweiten FET 3 auf ein höheres Potential ansteigt als die dem Auszustand entsprechende Spannung des ersten Spannungsimpulses A1.

Das zweite Impedanzelement kann ebenfalls ein Feldeffekttransistor vom Verarmungstyp sein, der mit seiner Gateelektrode am dritten Knotenpunkt N3 angeschlossen ist. Das erste, nur in einer Richtung Strom leitende Bauelement 6 kann ein Feldeffekttransistor vom Anreicherungstyp sein und ist mit seiner Gateeelektrode am vierten Knotenpunkt N4 angeschlossen.

Das zweite, nur in einer Richtung Strom leitende Bauelement D1 kann eine PN-Schichtdiode sein.

Die Arbeitsweise der Substratvorspannungs-Generatorschaltung ist dabei wie folgt:

Der Kondensator C3 stellt die äquivalente Substratkapazität dar. Wenn die am Knotenpunkt N3 liegende Spannung hoch ist, beträgt ihre Spannungsamplitude $\alpha x\ V_{H'}$ wobei $\alpha$ gleich der Größe $[1 + C1/(C1 + C2)]$ ist. Das ist auf die Spannungsverdopplungswirkung des Kondensators C1 zwischen den Knotenpunkten N1 und N2 zurückzuführen. Ist die am Knotenpunkt N3 liegende Spannung hoch, dann wird die am Knotenpunkt N4 liegende Spannung durch den Feldeffekttransistor 6 auf einem Potential gehalten, das kleiner ist als die Schwellenwertspannung $V_{TH}$ des FET 6 über Erdpotential, und die Substratvorspannung ist geringer als Null.

Wenn sich die Spannung am Knotenpunkt N3 beim Einschalten des Feldeffekttransistors 5 von $\alpha V_H$ auf 0 Volt oder Erdpotential ändert, dann folgt die Spannungsänderung am Knotenpunkt N4 solange der nach unten gerichteten Spannungsänderung am Knotenpunkt N3, bis die Diode D1 antsperrt wird. Die Diode D1 ist dann entsperrt, wenn die Spannung am Knotenpunkt N4 sich um den Wert $V_{TH}$ minus der Substratvorspannung $V_S$ verändert (unter der Annahme, daß für eine Näherungslösung die Schwellenwertspannung der Diode D1 vernachlässigbar ist). Wie sich die am Knotenpunkt N3 liegende Spannung weiter ändert, so ändert sich auch die am Knotenpunkt N4 liegende Spannung wegen der kapazitiven Neuverteilung der Ladung zwischen den Kapazitäten C2 und C3, so daß die Spannungsänderung am Knotenpunkt N4 gleich der Spannungsänderung am Knotenpunkt N3 mal dem Verhältnis $\beta$ wird, das gleich $C2/(C2 + C3)$ ist. Damit ist in jedem Zyklus der Schaltung die Veränderung in der Schwellenwertspannung gleich der Größe $[\alpha V_H - (V_{TH} + V_S)]$ $[(C2/(C2 + C3)]$. Damit nimmt die Substratvorspannung $V_S$ solange ab, bis der durch die Substratvorspannungs-Generatorschaltung über einen gegebenen Zyklus abgegebene Strom genau dem vom Substrat nach Erdpotential über den Leckwiderstand R1 abfließenden Strom entspricht.

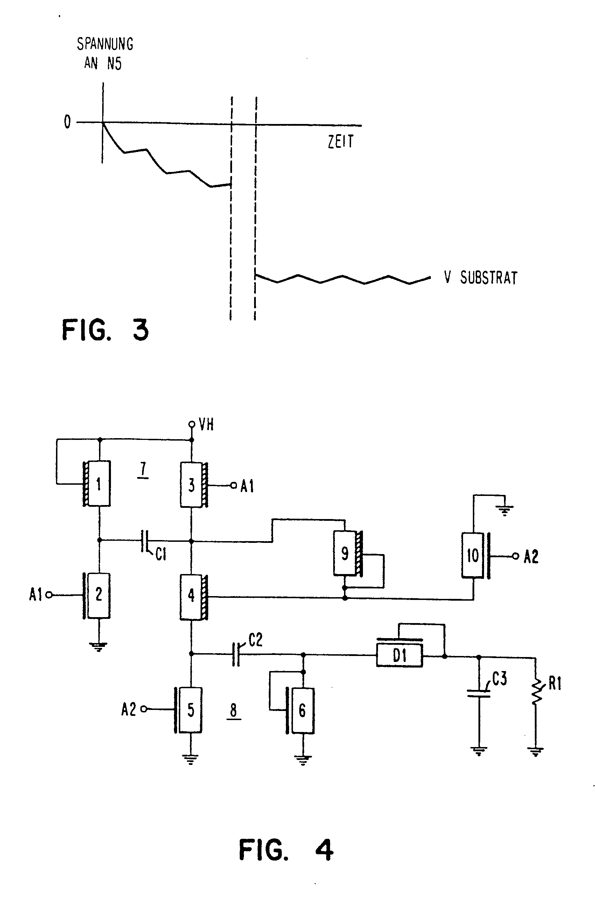

Zu Beginn liegt das Substrat auf Erdpotential. Mit jedem Zyklus der Substratgeneratorschaltung fließt Strom von dem Substrat über die Diode D1, wodurch sich die Substratvorspannung verringert. Mit Absinken der Substratvorspannung fließt immer weniger Strom durch D1, bis im eingeschwungenen Zustand der durch D1 nach der Substratvorspannungs-Generatorschaltung fließende Strom gerade den vom Substrat über R1 nach Erdpotential abfließenden Leckstrom kompensiert, wie dies Fig. 3 zeigt.

Die sich daraus ergebende Substratvorspannungs-Generatorschaltung kann aus der Betriebsspannung von +5 Volt ±10 % einer Spannungsversorgung und Erdpotential eine Substratvorspannung von −5 Volt erzeugen. Diese neue Schaltung leitet genügend Strom von dem Substrat ab, ohne dabei eine übermäßige Verlustleistung aufbringen zu müssen, und benötigt eine wesentlich geringere Fläche auf dem Substrat als bisher bekannte Substratvorspannungs-Generatorschaltungen. Die Schaltung weist keine statischen Lastwiderstände, wie im Stande der Technik auf, und damit erhält man eine wesentliche Verringerung der Verlustleistung der Schaltung.

Fig. 4 zeigt eine weitere Ausführungsform mit zusätzlichen Bauelementen 9 und 10, die die Spannungsverdopplungsschaltung 7 aus den Elementen 1, 2 und 3 und C1 von der die negative Spannung erzeugenden Schaltung 8 isolieren, die aus den Bauelementen 5, 6, D1, C2 und C3 besteht. Der Taktimpulszug A2 bewirkt diese Isolierung dadurch, daß FET 4 abgeschaltet wird, nachdem die Drainelektrode des FET 5 auf angenähert $2V_H$ aufgeladen ist. Die Spannungsverdopplerschaltung kann dann einen Zyklus durchlaufen, während der Generator 8 Strom an das Substrat abgibt. Als Ergebnis kann die Grundzykluszeit für den Substratvorspannungs-Generator verringert werden, so daß sich dadurch eine entsprechende Erhöhung der Ladung je Zeiteinheit ergibt, die von dem Substrat nach dem Substratvorspannungs-Generator geliefert werden kann.

**Ansprüche**

1. Substratvorspannungs-Generatorschaltung für integrierte Halbleiterschaltungen, welche zwischen einer Betriebsspannungsquelle und Erdpotential eingeschaltet ist, mit einem ersten zwischen Betriebsspannungsquelle ($V_H$) und einem ersten Knotenpunkt (N1) eingeschalteten Impedanzelement (1), einem zwischen dem ersten Knotenpunkt (N1) und Erdpotential eingeschalteten ersten Feldeffekttransistor (2), an dessen Gateelektrode ein erster periodischer Spannungsimpuls (A1) anliegt, einem zweiten an einem zweiten Knotenpunkt (N2) liegenden Feldeffekttransistor (3), an dessen Gateelektrode ebenfalls der erste periodische Spannungsimpuls (A1) anliegt, einem zwischen erstem und zweitem Knotenpunkt (N1, N2) eingeschalteten Kondensator (C1), einem zwischen einem dritten und einem vierten Knotenpunkt (N3, N4) eingeschalteten zweiten Kondensator (C2) und mit einem zweiten nur in einer Richtung Strom leitenden Bauelement (D1), das zwischen viertem Knotenpunkt (N4) und dem Substrat (N5) eingeschaltet und so gepolt ist, daß der Strom von dem Substrat wegfließt, gekennzeichnet durch die Lage des zweiten Feldeffekttransistors (3) zwischen der Betriebsspannungsquelle ($V_H$) und dem zweiten Knotenpunkt (N2), ferner durch ein zwischen dem zweiten und dem dritten Knotenpunkt (N2, N3) eingeschaltetes zweites Impedanzelement (4), einen zwischen drittem Knotenpunkt (N3) und Erdpotential eingeschalteten dritten Feldeffekttransistor (5), an dessen Gateelektrode ein zweiter periodischer Spannungsimpuls (A2) anliegt, dessen Spannung immer dann dem Einzustand entspricht, wenn die Spannung des ersten periodischen Spannungsimpulses (A1) dem Auszustand entspricht und umgekehrt, sowie durch ein erstes nur in einer Richtung Strom leitendes Bauelement (6), das zwischen dem vierten Knotenpunkt (N4) und Erdpotential eingeschaltet und so gepolt ist, daß der Strom nach Erdpotential abfließt, und durch eine Kapazität des zweiten Kondensators (C2), die kleiner ist als die Kapazität des ersten Kondensators (C1), wobei das erste einseitig leitende Bauelement (6) den zweiten Kondensator (C2) dann entlädt, wenn die Spannung am dritten Knotenpunkt (N3) in Abhängigkeit von der Spannung am zweiten Knotenpunkt (N2) ansteigt und dadurch, daß das zweite einseitig leitende Bauelement (D1) dann Strom von dem Substrat zieht, wenn die Spannung an dem vierten Knotenpunkt (N4) in Abhängigkeit davon abfällt, daß der zweite periodische Spannungsimpuls (A2) den dritten FET (5) einschaltet.

2. Schaltung nach Anspruch 1, dadurch gekennzeichnet, daß als erstes Impedanzelement ein Feldeffekttransistor verwendet ist, dessen Gateelektrode an dem dritten periodischen Spannungsimpuls (A3) angeschlossen ist, dessen Spannung nach Ansteigen des zweiten periodischen Spannungsimpulses (A2) auf eine dem Einzustand entsprechende Spannung ebenfalls auf eine dem Einzustand entsprechende Spannung ansteigt.

3. Schaltung nach Anspruch 2, dadurch gekennzeichnet, daß der als erstes Impedanzelement (1) wirkende Feldeffekttransistor vom Verarmungstyp ist.

4. Schaltung nach Anspruch 3, dadurch gekennzeichnet, daß der zweite Feldeffekttransistor (3) vom Verarmungstyp ist.

5. Schaltung nach den Ansprüchen 1 bis 3, dadurch gekennzeichnet, daß das zweite Impedanzelement (4) ein Feldeffekttransistor vom Verarmungstyp ist, dessen Gateelektrode am dritten Knotenpunkt (N3) angeschlossen ist.

6. Schaltung nach den Ansprüchen 1 bis 5, dadurch gekennzeichnet, daß das erste in nur einer Richtung Strom führende Bauelement (6) ein Feldeffekttransistor vom Anreicherungstyp ist, dessen Gateelektrode am vierten Knotenpunkt (N4) angeschlossen ist.

7. Schaltung nach Anspruch 1, dadurch gekennzeichnet, daß das zweite nur in einer Richtung Strom leitende Bauelement (D1) eine PN-Schichtdiode ist.

8. Schaltung nach den Ansprüchen 1 bis 7, dadurch gekennzeichnet, daß der zweite Feldeffekttransistor (3) dann in seinen leitenden Zustand übergeht, wenn der erste Spannungsimpuls (A1, Fig 2) sich im Einzustand (+V, Fig. 2) befindet, und dann in seinen Sperrzustand übergeht, wenn der erste Spannungsimpuls (A1, Fig. 2) in den Auszustand (0, Fig. 2) übergeht und der zweite Knotenpunkt (N2) die Spannung

$$V = \alpha V_H \left( \text{mit } \alpha = 1 + \frac{C1}{C1 + C2} \right)$$

annimmt.

**Claims**

1. Substrate voltage generator circuit for integrated semiconductor circuits which is arranged between a power supply and ground potential, with a first impedance device (1) connected between power supply ($V_H$) and a first node (N1), a first field effect transistor (2) connected between the first node (N1) and ground potential, having a first periodic voltage pulse (A1) applied to its gate electrode, with a second field effect transistor (3) connected to a second node (N2), also having the first periodic voltage pulse (A1) applied to its gate electrode ; a first capacitor (C1) connected between the first and second node (N1, N2), a second capacitor (C2) connected between third and fourth node (N3, N4), and with a second, uni-directional current conducting component (D1) connected between the fourth node (N4) and the substrate (N5), said component being poled to conduct current out of the substrate, characterized by the position of the second field effect transistor (3) between the power supply ($V_H$) and the second node (N2), furthermore by a second impedance device (4) connected between the second and the third node (N2, N3), by a third field effect transistor (5) connected between third node and ground potential, said field effect transistor having applied to its gate electrode a second periodic voltage pulse (A2) whose voltage rises to the on-state when the voltage of the first periodic voltage pulse (A1 falls to the off-state, and vice-versa, and by a first uni-directional current conducting component (6) connected between the fourth node (N4) and ground potential, said component being poled to conduct current to ground potential, and by a capacitance of the second capacitor (C2) which is less than the capacitance of the first capacitor (C1), the first uni-directional current conducting component (6) discharging the second capacitor (C2) when the voltage at the third node (N3) rises as a function of the voltage on the second node (N2), and in that the second uni-directional current conducting component (D1) conducts current out of the substrate when the voltage at the fourth node (N4) decreases in response to the second periodic voltage pulse (A2) switching on the third FET (5).

2. Circuit as claimed in claim 1, characterized in that as the first impedance device a field effect transistor is used whose gate electrode is connected to a third periodic voltage pulse (A3), whose voltage, after the second periodic voltage pulse (A2) has risen to the on-state, also rises to the on-state.

3. Circuit as claimed in claim 2, characterized in that the field effect transistor serving as the first impedance device (1) is of the depletion type.

4. Circuit as claimed in claim 3, characterized in that the second field effect transistor (3) is of the depletion type.

5. Circuit as claimed in any one of claims 1 to 3, characterized in that the second impedance device (4) is a field effect transistor of the depletion type having its gate electrode connected to the third node (N3).

6. Circuit as claimed in any one of claims 1 to 5, characterized in that the first uni-directional current conducting component (6) is a field effect transistor of the enhancement type having its gate electrode connected to the fourth node (N4).

7. Circuit as claimed in claim 1, characterized in that the second uni-directional current conducting component (D1) is a P-N junction diode.

8. Circuit as claimed in any one of claims 1 to 7, characterized in that the second field effect transistor (3) goes into its conductive state when the first voltage pulse (A1, Fig. 2) is in the on-state (+ V, Fig. 2), and in that it goes into its nonconductive state when the first voltage pulse (A1, Fig. 2) goes into the off-state (0, Fig. 2), and the second node (N2) has the voltage

$$V = \alpha V_H \ (\text{with } \alpha = 1 + \frac{C1}{C1 + C2}).$$

## Revendications

1. Circuit générateur pour tension de polarisation de substrat pour des circuits semi-conducteurs intégrés, connecté entre une source de tension d'alimentation et le potentiel de masse, comprenant un premier élément d'impédance (1) connecté entre une source de tension d'alimentation ($V_H$) et un premier nœud (N1), un premier transistor à effet de champ (2), connecté entre le premier nœud (N1) et le potentiel de masse, à la porte duquel on applique une première impulsion de tension périodique (A1), un second transistor à effet de champ (3), connecté à un second nœud (N2), à la porte duquel on applique également la première impulsion de tension périodique (A1), un premier condensateur (C1) connecté entre le premier et le second nœud (N1, N2), un second condensateur (C2) connecté entre un troisième et quatrième nœud (N3, N4), et un second composant (D1) conducteur du courant dans une seule direction, connecté entre le quatrième nœud (N4) et le substrat (N5), et dont les pôles sont disposés de telle sorte que le courant sorte du substrat, caractérisé par la position du second transistor à effet de champ (3) entre la source de tension d'alimentation ($V_H$) et le second nœud (N2), en outre par un second élément d'impédance (4) connecté entre le second et le troisième nœud (N2, N3), par un troisième transistor à effet de champ (5), connecté entre le troisième nœud (N3) et le potentiel de masse, à la porte duquel on applique une seconde impulsion de tension périodique (A2), dont la tension correspond toujours à l'état conducteur lorsque la tension de la première impulsion de tension périodique (A1) correspond à l'état bloqué, et vice-versa, ainsi que par un premier composant (6) conducteur du courant dans une seule direction, connecté entre le quatrième nœud (N4) et le potentiel de masse et dont les pôles sont disposés de telle sorte que le courant passe vers le potentiel de masse, et par une capacité du second condensateur (C2) qui est plus petite que la capacité du premier condensateur (C1), de sorte que le premier composant (6) conducteur dans une seule direction décharge le second condensateur (C2) lorsque la tension du troisième nœud (N3) augmente en fonction de la tension du second nœud (N2), et en ce que le second composant (D1) conducteur dans une seule direction prend du courant à partir du substrat quand la tension du quatrième nœud (N4) diminue lorsque la seconde impulsion de tension périodique (A2) rend conducteur le troisième transistor à effet de champ (5).

2. Circuit selon la revendication 1, caractérisé en ce que comme premier élément d'impédance on utilise un transistor à effet de champ dont la porte est connectée à la troisième impulsion de tension périodique (A3) dont la tension, après que la seconde impulsion de tension périodique (A2) ait augmenté jusqu'à une tension correspondant à l'état conducteur, augmente de même jusqu'à une tension correspondant à l'état conducteur.

3. Circuit selon la revendication 2, caractérisé en ce que le transistor à effet de champ servant de premier élément d'impédance (1) est du type à appauvrissement.

4. Circuit selon la revendication 3, caractérisé en ce que le second transistor à effet de champ (3) est du type à appauvrissement.

5. Circuit selon l'une quelconque des revendications 1 à 3, caractérisé en ce que le second élément d'impédance (4) est un transistor à effet de champ du type à appauvrissement dont la porte est connectée au troisième nœud (N3).

6. Circuit selon l'une quelconque des revendications 1 à 5, caractérisé en ce que le premier composant (6) conducteur de courant dans une seule direction est un transistor à effet de champ du type à enrichissement dont la porte est connectée au quatrième nœud (N4).

7. Circuit selon la revendication 1, caractérisé en ce que le second composant (D1) conducteur du courant dans une seule direction est une diode à jonction P-N.

8. Circuit selon l'une quelconque des revendications 1 à 7, caractérisé en ce que le second transistor à effet de champ (3) entre dans son état conducteur lorsque la première impulsion de tension (A1, figure 2) se trouve dans l'état conducteur (+ V, figure 2), et entre dans son état bloqué lorsque la première impulsion de tension (A1, figure 2) entre dans l'état bloqué (0, figure 2), et lorsque le second nœud (N2) a la tension

$$V = \alpha V_H \text{ (avec } \alpha = 1 + \frac{C1}{C1 + C2} \text{ )}.$$

FIG. 1

FIG. 2

2/2

SPANNUNG
AN N5

0 _____ ZEIT

V SUBSTRAT

FIG. 3

FIG. 4